Europäisches Patentamt

**European Patent Office**

**Office européen des brevets**

(19)

(11) Veröffentlichungsnummer: **0 184 646**
A2

# (12) EUROPÄISCHE PATENTANMELDUNG

(21) Anmeldenummer: 85113425.4

(22) Anmeldetag: 23.10.85

(51) Int. Cl.⁴: **C 08 L 61/20,** C 08 L 97/02, C 09 J 3/16

(30) Priorität: 02.11.84 DE 3439929

(43) Veröffentlichungstag der Anmeldung: **18.06.86** **Patentblatt 86/25**

(84) Benannte Vertragsstaaten: **AT BE CH DE FR GB IT LI NL SE**

(71) Anmelder: **BASF Aktiengesellschaft, Carl-Bosch-Strasse 38, D-6700 Ludwigshafen (DE)**

(72) Erfinder: **Pitteroff, Walter, Dr., In den Hahndornen 10, D-6719 Bobenheim (DE)**
Erfinder: **Lehnert, Heinz, Anselm-Feuerbach-Strasse 11f, D-6710 Frankenthal (DE)**
Erfinder: **Merkel, Dieter, Dr., Wolframstrasse 7, D-6700 Ludwigshafen (DE)**
Erfinder: **Matthias, Guenther, Dr., Meergartenweg 25a, D-6710 Frankenthal (DE)**

(54) **Härter für Aminoplast-Harze, seine Verwendung bei der Kaschierung und Furnierung von Holzwerkstoffen sowie Verfahren zum Kaschieren und Furnieren von Holzwerkstoffen.**

(57) Die vorliegende Erfindung betrifft einen neuen Härter für Aminoplast-Harze, enthaltend anorganische oder organische Säuren, in wäßrigem Medium Thixotropie verursachende Stoffe, (un)veretherte Oligoglykole und Netzmittel, die Verwendung eines solchen Härters zur Aushärtung von Aminoplast-Harzen, die bei der Kaschierung von Holzwerkstoffen mit Folien nach dem Rollenheißkaschierverfahren oder bei der Kurztaktbeschichtung von Holzwerkstoffen mit Holzfurnieren als Klebemittel zur Anwendung kommen sowie Verfahren zur Rollenheißkaschierung von Holzwerkstoffen mit Folien und zur Kurztaktbeschichtung von Holzwerkstoffen mit Holzfurnieren.

Härter für Aminoplast-Harze, seine Verwendung bei der Kaschierung und Furnierung von Holzwerkstoffen sowie Verfahren zum Kaschieren und Furnieren von Holzwerkstoffen

Die vorliegende Erfindung betrifft einen neuen Härter für Aminoplast-Harze, enthaltend anorganische oder organische Säuren, in wäßrigem Medium Thixotropie verursachende Stoffe, (un)veretherte Oligoglykole und Netzmittel, die Verwendung eines solchen Härters zur Aushärtung von Aminoplast-Harzen, die bei der Kaschierung von Holzwerkstoffen mit Folien nach dem Rollenheißkaschierverfahren oder bei der Kurztaktbeschichtung von Holzwerkstoffen mit Holzfurnieren als Klebemittel zur Anwendung kommen sowie Verfahren zur Rollenheißkaschierung von Holzwerkstoffen mit Folien und zur Kurztaktbeschichtung von Holzwerkstoffen mit Holzfurnieren.

Ein großer Teil der heute verbrauchten Holzwerkstoffe wird an der Oberfläche beschichtet. Als Beschichtungsmaterialien dienen dabei überwiegend Folien und Holzfurniere.

Verwendet man Folien zur Beschichtung (Kaschierung), so werden diese üblicherweise mit PVC-Heißsiegel-Klebern, Polyvinylacetat-Dispersionen, Polyurethan- oder Epoxyharzklebern sowie mit Aminoplast-Harzen, insbesondere Harnstoff-Formaldehyd-Harzen verklebt.

Die Anwendung von Harnstoff-Formaldehyd-Harzen bringt einige Vorteile mit sich. So sind diese Harze gegenüber den anderen Klebemitteln wesentlich preisgünstiger und zudem zeichnen sich die solchermaßen beschichteten Holzwerkstoffe u.a. durch eine gute und harte Oberfläche sowie durch gute Druck- und Wasserfestigkeit aus.

Eine Möglichkeit, die Beschichtung der Holzwerkstoffe mit Folien vorzunehmen, besteht im sogenannten Rollenheißkaschierverfahren. Verwendet man dazu Harnstoff-Formaldehyd-Harze als Klebemittel, so wird hierbei die als Beschichtungsmaterial dienende Folie zunächst mit einer Härterlösung behandelt und anschließend getrocknet, beispielsweise durch Strahlung. Im eigentlichen Beschichtungsvorgang wird der jeweilige Holzwerkstoff beleimt und die Folie dann in kontinuierlichem Prozeß abgerollt und mit einer beheizten Walze auf den Holzwerkstoff gepreßt. Dabei mischt sich der Härter mit dem Leim und es ergibt sich eine feste Klebeverbindung.

Eine Variante dieses Verfahrens besteht darin, daß der jeweilige Holzwerkstoff beleimt und daraufhin die Leimschicht eingetrocknet wird. Auf diese getrocknete Schicht wird anschließend eine gleichmäßige Härterschicht gebracht. Unmittelbar danach erfolgt dann das Aufpressen der nun allerdings härterfreien Folie auf dem oben beschriebenen Weg.

lh/Hoe/Kl

0184646

Im Falle der Holzfurniere werden hauptsächlich Aminoplast-Harze als Klebemittel eingesetzt.

Eine Möglichkeit, die Furnierung von Holzwerkstoffen mit Holzfurnieren vorzunehmen, besteht im sogenannten Kurztaktverfahren. Dabei wird der jeweilige Holzwerkstoff mit Aminoplast-Harzen beleimt und mit dem Härter beaufschlagt. Daran anschließend wird das Furnier aufgelegt und in einer Kurztaktpresse im Zeitraum von ca. 15 bis 30 Sekunden aufgepreßt. Auch hier ist es aber möglich, den Härter nur auf das Furnier aufzubringen und dann zu verpressen.

Obgleich die Anwendung von Aminoplast-Harzen als Klebemittel wichtige Vorteile mit sich bringt, ist ihre Verwendung, insbesondere im Rollenheißkaschierverfahren dennoch nicht unproblematisch.

Da Aminoplast-Harz und Härter immer getrennt aufgebracht werden müssen, nämlich das Harz auf den Holzwerkstoff und der Härter auf die Folie bzw. auf die getrocknete Harzschicht des Holzwerkstoffs, ist dafür Sorge zu tragen, daß der Härter nicht in die Folie bzw. nicht in unkontrollierter Weise in die getrocknete Harzschicht eindringt. Wenn der Härter in die Folie eindringt, führt dies zu mangelhafter Aushärtung des Harzes und damit zu einer ungenügenden Verklebung. Wenn der Härter in unkontrollierter Weise in die getrocknete Harzschicht eindringt, führt dies zu einer frühzeitigen Aushärtung wobei ebenfalls eine ungenügende Verklebung resultiert.

Weiterhin muß die Härtungsgeschwindigkeit im Preßverfahren groß sein, um somit günstige Vorschubgeschwindigkeiten der Holzwerkstoffe (ca. 25 m/min) zu garantieren.

Aufgabe der vorliegenden Erfindung war es nun, einen Härter bereitzustellen, der eine schnelle Aushärtung des Aminoplast-Harzes und damit einen schnellen Durchlauf der Holzwerkstoffe sicherstellt, der weiterhin weder in die Folie noch in die getrocknete Harzschicht eindringt und der schließlich ein sicheres Aushärten, auch bei teilweiser oder weitgehender Antrocknung gewährleistet.

Es wurde ein neuer Härter für Aminoplast-Harze gefunden, der, bezogen auf sein Gesamtgewicht, 10 bis 30 Gew.% ein- oder mehrbasige anorganische oder organische Säuren, deren $pK_a$-Wert kleiner oder gleich 2 ist, 0,2 bis 1 Gew.% von in wäßrigem Medium Thixotropie verursachenden Stoffen, 1 bis 5 Gew.% an den endständigen Hydroxylgruppen unveretherte oder mit niederen Alkanolen veretherte Oligoglykole und 0,2 bis 2 Gew.% Netzmittel enthält.

Der erfindungsgemäße Härter läßt sich vorteilhaft verwenden für die Aushärtung von Aminoplast-Harzen, die bei der Kaschierung von Holzwerkstoffen mit Folien nach dem Rollheißkaschierverfahren oder bei der Kurztaktbeschichtung von Holzwerkstoffen mit Holzfurnieren als Klebemittel zur Anwendung kommen.

Es wurde weiterhin gefunden, daß die Rollenheißkaschierung von Holzwerkstoffen mit Folien und Aminoplast-Harzen als Klebemitteln vorteilhaft gelingt, wenn man die Aminoplast-Harze mit dem erfindungsgemäßen Härter aushärtet.

Ebenso gelingt die Kurztaktbeschichtung von Holzwerkstoffen mit Holzfurnieren und Aminoplast-Harzen als Klebemitteln in vorteilhafter Weise, wenn man die Aminoplast-Harze mit dem erfindungsgemäßen Härter aushärtet.

Als eigentliche Härterkomponenten dienen ein- oder mehrbasige anorganische oder organische Säuren, deren $pK_a$-Wert kleiner oder gleich 2 ist und die in Wasser hinreichend löslich sind. Beispielhaft sind zu nennen Phosphorsäure, Benzolsulfonsäure, Dichloressigsäure, Trichloressigsäure oder Maleinsäure. Vorzugsweise setzt man Maleinsäure ein, wobei diese Dicarbonsäure auch in Form ihres Anhydrids verwendet werden kann.

Die Menge der eingesetzten Säuren hängen in erster Linie von der Größe des $pK_a$-Werts der jeweiligen Säure, von der Aushärtungstemperatur, von der beabsichtigten Vorschubgeschwindigkeit der zu behandelnden Holzwerkstoffe sowie von der Reaktivität der eingesetzten Aminoplast-Harze ab. Der Anteil der Säuren im Härter liegt bei 10 bis 30 Gew.%, vorzugsweise 20 bis 30 Gew.%, bezogen auf das Gesamtgewicht des Härters, wobei diese Werte im Einzelfall noch unter- oder überschritten werden können.

Die erfindungsgemäßen Härter müssen weiterhin 0,2 bis 1 Gew.%, vorzugsweise 0,2 bis 0,6 Gew.%, jeweils bezogen auf das Gesamtgewicht des Härters, von in wäßrigem Medium Thixotropie verursachenden Stoffen enthalten.

Unter Thixotropie versteht man den Effekt, daß durch Einwirkung von Scherkräften die vorher sehr hohe Viskosität fließender Stoffe stark erniedrigt wird, wobei sich nach Beendigung der Scherkrafteinwirkung die Viskosität zeitabhängig wieder erhöht. In der vorliegenden Erfindung soll darunter aber auch der Effekt verstanden werden, daß sich die Viskosität nach Beendigung der Scherkrafteinwirkung sofort wieder erhöht. Dieser Effekt wird im allgemeinen durch den Begriff "Strukturviskosität" charakterisiert.

Als Thixotropie verursachende Stoffe lassen sich vorteilhaft entsprechende Poly(meth)acrylamide und Polysaccharide verwenden. Die Anwendung von Thixotropie verursachenden Stoffen auf anorganischer Basis, z.B. kolloidale Kieselsäure hat sich als unvorteilhaft herausgestellt.

Poly(meth)acrylamide sind die üblicherweise durch radikalische Polymerisation erzeugten Polymerisate von (Meth)acrylamid. Diese Polymeren weisen im allgemeinen einen K-Wert von 100 bis 290, vorzugsweise von 150 bis 250 auf. Der K-Wert wird dabei in wäßriger Lösung bei einer Temperatur von 25°C nach der Methode von H. Fikentscher, Cellulosechemie 13, 58 bis 64 und 71 bis 74 (1932) gemessen. K ist k x $10^3$.

Das Molekulargewicht der Verbindungen liegt üblicherweise bei $10^6$ oder darüber.

Man unterscheidet dabei nichtionogene und ionogene Poly(meth)acrylamide. Als nichtionogene Poly(meth)acrylamide verwendet man beispielsweise Homopolymerisate des (Meth)acrylamids mit geringen durch unkontrollierte Verseifung entstandenen Anteilen an Carboxylgruppen.

Die ionogenen Polymeren unterteilen sich in anionische und kationische Poly(meth)acrylamide. Anionische Produkte sind z.B. teilverseiftes Poly-(meth)acrylamid, Copolymerisate von (Meth)acrylamid mit Alkali(meth)acrylaten oder Vinylsulfonaten. Bei den kationischen Produkten sind beispielsweise Copolymerisate des (Meth)acrylamids mit Salzen oder mit Quaternisierungsprodukten (z.B. von Diethylaminoethyl(meth)acrylat, Dimethylaminopropyl(meth)acrylamid) oder auch aminomethyliertes Poly(meth)-acrylamid zu nennen.

Eine wichtige Eigenschaft dieser Poly(meth)acrylamide ist ihre Wasserlöslichkeit.

Aus der älteren deutschen Anmeldung P 33 43 670.3 ist es bekannt, einem gefüllten Härter für Aminoplast-Leimharzflotten, die zur Flächenverleimung von Holzwerkstoffen verwendet werden, neben Schichtsilicaten auch Poly(meth)acrylamid als Bestandteil zuzusetzen.

Solche Dispersionen zeigen häufig den erwähnten Effekt der Strukturviskosität. Da aber nicht alle Poly(meth)acrylat-Dispersionen diesen Effekt aufweisen, ist es vorteilhaft, durch einfache Voruntersuchungen des rheologischen Verhaltens (Viskositätsmessungen), die für die erfindungsgemäßen Härter günstigen Dispersionen zu ermitteln.

0184646

Polysaccharide sind bekanntlich hochpolymere Kohlenhydrate. Nach ihrem Vorkommen in der Natur können sie in pflanzliche und mikrobielle Polysaccharide unterteilt werden. Pflanzliche Polysaccharide wie Pektin, Algin, Carrageenan, Agar, Johannisbrotkernmehl, Tara-Gummi, Tragant oder Karaya-Gummi finden sich beispielsweise in den Zellwänden von Landpflanzen oder Algen sowie in den Samen oder Exsudaten bestimmter Pflanzenarten. Mikrobielle Polysaccharide, z.B. Algin, Pendulan oder Xanthan entstehen durch Biosynthese mittels Mikroorganismen.

Die Einzelbausteine von Polysacchariden sind Monosaccharide oder Monosaccharid-Derivate. Sie besitzen Furanose- oder Pyranosestruktur und liegen in D- oder L-Form vor. Ihre Verknüpfung erfolgt über $\alpha$- oder ß-(1,4)-glycosidische Bindungen, wobei aber auch andere Kombinationen möglich sind, z.B. (1,3)- oder (1,6)-glycosidische Bindungen.

Je nachdem, ob die Polysaccharide aus einem oder verschiedenen Monosacchariden aufgebaut sind, unterscheidet man Homo- bzw. Heteropolysaccharide, z.B. Mannane, Xylane, Glucane, Galactane bzw. Glucomannane, Galactomannane oder Arabinoxylane.

Wie oben schon ausgeführt, sind für die erfindungsgemäßen Härter sowie für die Durchführung der erfindungsgemäßen Verfahren solche Polysaccharide geeignet, die in wäßrigem Medium Thixotropie verursachen.

Auch hierbei ist anzumerken, daß analog den Poly(meth)acrylamiden, nicht alle Polysaccharide in wäßrigem Medium Thixotropie verursachen. Durch einfache Viskositätsuntersuchungen ist es jedoch auch hier im allgemeinen leicht möglich, die geeigneten Polysaccharide zu ermitteln.

Das Molekulargewicht geeigneter Polysaccharide liegt in einem Bereich von ca. 100.000 bis 3.000.000.

Als für das erfindungsgemäße Verfahren vorteilhafte Verbindungsklassen haben sich verzweigte Polysaccharide ergeben, deren Hauptkette aus D-Glucoseeinheiten oder D-Mannoseeinheiten bestehen.

Als Produkte, die sich von D-Mannose ableiten, sind besonders die D-Galacto-D-mannane zu nennen, deren Mannan-Kette aus (1,4)-glycosidisch verknüpften ß-D-Mannopyranoseeinheiten aufgebaut ist. Das Verhältnis von D-Galactose zu D-Mannose beträgt 1:2 und das Molekulargewicht liegt etwa bei 200.000 bis 300.000. Die $\alpha$-D-Galactopyranosebausteine sind an jeden zweiten D-Mannosebaustein der Mannankette über eine (1,6)-glycosidische Bindung verknüpft.

Verbindungen dieser Art, deren freie OH-Funktionen durch Hydroxypropylierungs- und Carboxymethylierungsreaktionen partiell verethert wurden, werden besonders bevorzugt.

Als Produkt auf D-Glucose-Basis ist beispielsweise Pendulan zu nennen, dessen Glucan-Kette aus (1,3)-glycosidisch verknüpften ß-D-Glucopyranoseeinheiten aufgebaut ist, wobei zusätzlich an jeden dritten Glucosebaustein der Glucankette ein weiterer ß-D-Glucopyranosebaustein über eine (1,6)-glycosidische Bindung geknüpft ist.

Ein weiteres, besonders bevorzugtes Produkt auf D-Glucose-Basis ist Xanthan, dessen Molekulargewicht ca. 2.000.000 beträgt. Die Glucan-Kette des Xanthans besteht aus (1,4)-glycosidisch verknüpften ß-D-Glucopyranoseeinheiten, wobei jeder zweite Glucosebaustein der Kette eine Seitenkette trägt, bestehend aus zwei ß-D-Mannopyranoseeinheiten und einer ß-D-Glucuronsäureeinheit.

Polysaccharide sind wasserlösliche oder stark quellbare Stoffe, die kolloidale, hochviskose Lösungen oder Dispersionen ergeben. So sind unter wäßrigen Flüssigkeiten molekulare bzw. kolloidale Lösungen oder auch Dispersionen zu verstehen.

Der Zusatz verschiedener Polysaccharide als Hilfsmittel zu Aminoplast-bzw. Phenoplastleimharzen ist bekannt.

So wird in der DE-C-853 929 und in der SE-A-370 546 der Zusatz von Alginaten beschrieben. Diese Produkte werden aber, ebenso wie die in der US-A-2 613 167 genannten Celluloseether, als Verdickungsmittel bzw. als Schutzkolloid eingesetzt und zeigen keine thixotrope Wirkung.

Nach der Lehre der EP-A-96 797 sollen bei der Herstellung von Spanholzwerkstoffen zur Verringerung der Formaldehydemission die Späne vor oder nach oder gleichzeitig mit dem Bindemittelauftrag mit einer wäßrigen Flüssigkeit behandelt werden, die Mittel zur Bindung von Formaldehyd sowie eine Thixotropie verursachendes Polysaccharid enthält.

Aus diesem Vorschlag war aber keine Anregung zu entnehmen, daß Härter, die sich u.a. durch einen Gehalt von in wäßrigem Medium Thixotropie verursachenden Stoffen auszeichnen, schließlich Vorteile bei der Aushärtung von Aminoplast-Harzen, die bei der Kaschierung von Holzwerkstoffen mit Folien nach dem Rollenheißkaschierverfahren oder bei der Kurzkontaktbeschichtung von Holzwerkstoffen mit Holzfurnieren als Klebemittel zur Anwendung kommen, mit sich bringen würden.

0184646

Schließlich wird in der älteren deutschen Anmeldung P 33 16 352.9 ein Verfahren zum Verleimen von Massivholz mittels Aminoplast- oder Phenoplast-Leimharzen beschrieben, wobei die Leimharze und/oder Härtermischungen ein Polysaccharid enthalten, das in wäßriger Flüssigkeit Thixotropie verursacht.

Eine weitere wesentliche Komponente der erfindungsgemäßen Härter sind Oligoglykole. Oligoglykole im Sinne der Erfindung sind Oligomere, die sich von Ethylenglykol, Propylenglykol oder von 1,2-, 1,4- bzw. 2,3-Butylenglykol ableiten. Diese Oligomeren können aus 2 bis 10 Einheiten der jeweiligen Glykole bestehen.

Bevorzugt sind die Oligomeren die sich von Ethylenglykol ableiten, wobei insbesondere Di-, Tri-, Tetra- und Pentaethylenglykol zu nennen sind.

Die Oligoglykole können an ihren endständigen Hydroxylgruppen entweder unverethert und mit niederen Alkanolen verethert sein, wobei sowohl partiell wie auch vollständig veretherte Produkte verwendbar sind. Als mögliche Veretherungskomponenten dienen niedere Alkanole, wie Methanol, Ethanol, Isopropanol oder Butanol.

Der Gehalt der erfindungsgemäßen Härter an Oligoglykolen liegt bei 1 bis 5 Gew.%, vorzugsweise 1 bis 2 Gew.%, jeweils bezogen auf das Gesamtgewicht des Härters.

Schließlich müssen die erfindungsgemäßen Härter auch Netzmittel enthalten. Netzmittel sind grenzflächenaktive Stoffe, die üblicherweise einen hydrophoben und einen hydrophilen Molekülteil aufweisen. Man unterscheidet dabei zwischen nichtionischen, anionischen und kationischen Netzmitteln.

Nichtionische Netzmittel sind beispielsweise Ester und Amide von Fettsäuren (gesättigte oder ungesättigte Carbonsäuren, die im allgemeinen 4 bis 26 Kohlenstoffatomen im Molekül aufweisen), Fettamine (primäre Amine, die im allgemeinen 6 bis 22 Kohlenstoffatome im Molekül aufweisen) oder Polyethylenglykolether bzw. Polypropylenglykolether von Alkoholen, Alkylphenolen oder Fettsäurealkanolamiden.

Als anionische Netzmittel sind z.B. Salze der Alkylmalon- oder Alkylbernsteinsäure, Alkylsulfonate, Fettsäureestersulfonate, perfluorierte Alkylsulfonate oder sulfatierte Fettsäureamide zu nennen.

Kationische Netzmittel sind Stoffe, wie Fettaminsalze, Salze von Alkylendiaminen und Polyaminen, Alkylbenzylammoniumsalze oder Alkylpyridiniumsalze.

0184646

Bevorzugt sind solche Härter, die einen Gehalt an nichtionischen Netzmitteln aufweisen.

Der Gehalt der erfindungsgemäßen Härter an Netzmitteln liegt bei 0,2 bis 2 Gew.%, vorzugsweise 0,2 bis 0,4 Gew.%, jeweils bezogen auf das Gesamtgewicht des Härters.

Vorzugsweise enthält der erfindungsgemäße Härter auch Metallsalze, die sich von den Metallen der Gruppen 1A, 2A und 3A des Periodensystems der Elemente ableiten. Geeignet sind solche Salze, die wasserlöslich sind und die sich üblicherweise bis zu einem gewissen Umfang hygroskopisch verhalten. Dies sind beispielsweise die Halogenide oder Sulfate von Natrium, Magnesium, Calcium oder Aluminium. Man verwendet dabei zweckmäßig die handelsüblichen Salze, die meistenteils noch Kristallwasser enthalten, z.B. Aluminiumchlorid-hexahydrat oder Magnesiumchlorid-hexahydrat.

Der Gehalt der genannten Metallsalze liegt bei 1 bis 5 Gew.%, vorzugsweise 1 bis 3 Gew.%, jeweils bezogen auf das Gesamtgewicht des Härters.

Weiterhin können dem erfindungsgemäßen Härter auch an sich übliche Hilfsmittel des Standes der Technik, z.B. Schaumverhütungsmittel zugesetzt werden.

Holzwerkstoffe, die sich für die erfindungsgemäßen Verfahren eignen, sind z.B. Spanplatten, Hartfaserplatten, Tischlerplatten oder Vollholz.

Als Klebemittel auf Aminoplast-Harz-Basis, die im Rollenheißkaschierverfahren bzw. bei der Kurztaktbeschichtung von Holzwerkstoffen mit Holzfurnieren zur Anwendung kommen, sind die üblichen an sich bekannten Aminoplast-Leimharze zu nennen.

Im Rollenheißkaschierverfahren werden dabei vorzugsweise Harnstoff-Formaldehyd-Harze verwendet. Sie weisen im allgemeinen ein Molverhältnis von Formaldehyd : Harnstoff von 2,2:1 bis 1,4:1 auf. Ihre Viskosität (gemessen bei 20°C) liegt im Bereich von 1000 bis 600 mPas und ihr Feststoffgehalt bei 70 bis 50 Gew.%, bezogen auf die Harzlösung.

Bei der Furnierung nach dem Kurztakt-Verfahren werden vorzugsweise neben den oben genannten Harnstoff-Formaldehyd-Harzen auch solche verwendet, deren Molverhältnis Formaldehyd : Harnstoff noch geringer ist und bis zu 1:1 betragen kann. Vorteilhaft werden auch Mischungen von Harnstoff-Formaldehyd-Harzen mit Melamin-Formaldehyd-Harzen für diesen Zweck eingesetzt.

Als Folien, mit denen die Holzwerkstoffe im erfindungsgemäßen Verfahren beschichtet werden, verwendet man die üblichen an sich bekannten rollfähigen Oberflächenmaterialien. Dies sind beispielsweise thermoplastische Folien, wie PVC-Folien, ABS-Folien (Acrylnitril-Butadien-Styrol-Folien) oder Polystyrolfolien sowie Folien auf Papierbasis, wie Melaminfilme, Grundier- und Dekorfolien, Fertigeffektfolien oder DAP-Folien (Diallylphthalat-Folien). Es können aber auch rollfähige Schichtstoffplatten für diesen Zweck verwendet werden. Dies sind Laminate aus Träger- und Dekor-papieren, die mit reinem Polyesterharz durchtränkt und danach schichtfest miteinander verpreßt und ausgehärtet werden.

Als Holzfurniere dienen die üblichen an sich bekannten Furnierblätter, die in Form von Messer- oder Schälfurnieren aus den jeweils gewünschten Holzarten erhalten werden.

Der erfindungsgemäße Härter wird durch Mischen seiner Komponenten in den genannten Mengenverhältnissen erhalten, wobei zweckmäßig Wasser als Lösungsmittel dient.

Zur Durchführung des erfindungsgemäßen Verfahrens zur Rollenheißkaschierung von Holzwerkstoffen mit Folien wird zunächst, wie oben bereits ausgeführt, die Folie mit 5 bis 30 g/m$^2$, vorzugsweise 10 bis 20 g/m$^2$ des erfindungsgemäßen Härters besprüht und getrocknet.

Der zu kaschierende Holzwerkstoff wird seinerseits auf der Oberfläche mit 30 bis 80 g/m$^2$, vorzugsweise 40 bis 60 g/m$^2$ Aminoplast-Harz beleimt und anschließend wird auf die beleimte Oberfläche, die mit der Härterlösung behandelte Folie mittels einer beheizten Walze mit einem Druck von ca. 0,2 bis 0,8 N/mm$^2$ aufgepreßt. Die Preßtemperatur liegt üblicherweise bei 150 bis 220°C. Sie ist jedoch über einen weiten Bereich hinweg variabel, der u.a. auch von den verwendeten Materialien abhängig ist. So sind Preßprozesse auch bei Raumtemperatur möglich.

Die Vorschubgeschwindigkeit des Holzwerkstoffs beim Kaschiervorgang liegt im allgemeinen bei 25 bis 30 m/min.

Für den Fall, daß der Härter nicht auf die Folie, sondern ebenso wie das Aminoplast-Harz auf den Holzwerkstoff gegeben wird, gelten die oben genannten Bedingungen. Nach der Beleimung der Holzwerkstoff-Oberfläche wird jedoch das aufgetragene Aminoplast-Harz zunächst getrocknet und anschließend mit dem erfindungsgemäßen Härter behandelt und schließlich mit der härterfreien Folie verpreßt.

Zur Durchführung des erfindungsgemäßen Verfahrens zur Kurztaktbeschichtung von Holzwerkstoffen mit Holzfurnieren wird zunächst, wie oben ebenfalls bereits ausgeführt, der Holzwerkstoff mit 60 bis 120 g/m$^2$ Aminoplast-Harz beleimt und anschließend mit 10 bis 40 g/m$^2$ des erfindungsgemäßen Härters besprüht. Daran anschließend wird bei einer Preßtemperatur von 90 bis 150°C und einem Preßdruck von ca. 0,2 bis 0,8 N/mm$^2$ das trockene Furnier in einem Zeitraum von 15 bis 30 Sekunden aufgepreßt.

Für den Fall, daß der Härter nicht auf die beleimte Oberfläche des Holzwerkstoffs, sondern auf das Holzfurnier aufgetragen wird, gelten die oben genannten Bedingungen.

Mittels des erfindungsgemäßen Härters gelingt es, die in der Praxis geforderten Werte für Vorschubgeschwindigkeit bzw. Preßzeit einzuhalten.

In den erfindungsgemäßen Verfahren ergibt sich exakt zum Zeitpunkt des Verpressens eine rasche und innige Vermischung zwischen Klebemittel und Härter, woraus eine schnelle Aushärtung resultiert.

Der erfindungsgemäße Härter benetzt die Oberfläche der Folie bzw. des Furniers bzw. der jeweiligen Klebemittelschicht gleichmäßig. Kantenabhebungen, Blasen oder Verdickungen treten nicht auf.

Außerdem sei hervorgehoben, daß speziell beim Rollenheißkaschierverfahren, die auf die Folie gebrachte und dort eingetrocknete Härterschicht trotz des vorangegangenen Trocknungsprozesses in ihrer Reaktionsfähigkeit voll erhalten bleibt.

Schließlich weisen die gemäß den erfindungsgemäßen Verfahren hergestellten veredelten Holzwerkstoffe hohe Qualität auf. Sie zeigen günstige Ergebnisse für Wasser- und Druckfestigkeit sowie bei einer visuellen Beurteilung der behandelten Oberfläche. Auch eine Wiedererwärmung ist ohne Qualitätsverlust möglich.

Die nachfolgenden Beispiele sollen die Erfindung näher erläutern.

<u>Beispiele 1 bis 7</u>

Folgende Härterkompositionen wurden durch Zusammenmischen der jeweils genannten Bestandteile hergestellt.

Die in Tabelle 1 genannten Werte sind jeweils Gewichtsteile.

Tabelle 1:

| Härter | Säure | Thixotropier-mittel | Netz-mittel**) | Oligo-glykol | Metall-salz | Ent-schäumer***) | Wasser |
|---|---|---|---|---|---|---|---|
| 1 | Maleinsäure-anhydrid 20,0 | Polyacrylamid*) 0,4 | 0,3 | Triethylen-glykol 1,0 | Magnesium-chlorid 2,0 | 0,1 | 76,2 |
| 2 | Maleinsäure-anhydrid 20,3 | Xanthan 0,4 | 0,3 | Triethylen-glykol 1,0 | Magnesium-chlorid 2,0 | 0,1 | 75,9 |
| 3 | Phosphorsäure 23,0 | Xanthan 0,4 | 0,3 | Triethylen-glykol 1,0 | Magnesium-chlorid 2,0 | 0,1 | 74,2 |
| 4 | Maleinsäure-anhydrid 25,0 | Xanthan 0,4 | 0,3 | Diethylen-glykol 2,0 | Calcium-chlorid 3,0 | 0,1 | 69,2 |
| 5 | Maleinsäure 22,0 | Polyacrylamid*) 0,4 | 0,3 | Diethylen-glykol 1,5 | Magnesium-sulfat 2,0 | 0,1 | 73,7 |
| 6 | Dichloressig-säure 20,0 | Xanthan 0,4 | 0,3 | Triethylen-glykol 1,2 | Magnesium-chlorid 2,0 | 0,1 | 76,0 |
| 7 | Trichlor-essigsäure 20,0 | Xanthan 0,4 | 0,3 | Triethylen-glykol 1,0 | Kalium-aluminiumsulfat 2,0 | 0,1 | 76,2 |

*) Als Polyacrylamid diente ein Produkt mit einem Molekulargewicht von ca. $6 \times 10^6$, copolymerisiert mit 3 Gew.-% Acrylsäure, neutralisiert.

**) Als Netzmittel diente in allen Fällen ein nichtionisches Anlagerungsprodukt von Ethylenoxid an Octylphenol.

***) Als Entschäumer diente in allen Fällen ein Produkt auf Basis Triisobutylphosphat.

O.Z. 0050/37425

O.Z. 0050/37425

Die jeweiligen Härter wurden zum Aufkleben von Folien auf Spanplatten nach dem Rollenheißkaschierverfahren und zum Furnieren von Spanplatten mit Eichenholzfurnieren mittels Kurztaktbeschichtung angewandt.

Folgende Materialien wurden dazu verwendet:

Papier-Folie mit einem Gewicht von 85 g/m$^2$, die mit 39 g/m$^2$ eines Harnstoff-Formaldehyd-Tränkharzes getränkt wurde,
Eichenfurnier mit einer Dicke von 0,6 mm,
Spanplatten mit einer Dicke von 15 mm.

Als Klebemittel diente ein Harnstoff-Formaldehyd-Harz, das ein Molverhältnis Formaldehyd : Harnstoff von 1,85, eine Viskosität von 820 mPa.s (gemessen bei 20°C), einem Trockengehalt von 65,2 Gew.-% und einen Gehalt an Methylolgruppen von 20,5 % aufwies.

Zum Zweck der Gelierzeitbestimmung betrug das Verhältnis von insgesamt eingesetztem Klebemittel zu Härter 100 : 10 Gewichtsteile.

Die Folienversuche (Rollenheißkaschieren) fanden unter folgenden Bedingungen statt:

Preßtemperatur 140°C
Härterauftrag auf Folie 10 g/m$^2$, getrocknet
Klebemittelauftrag auf Spanplatte 50 g/m$^2$
Preßdruck 0,5 N/mm$^2$
Preßzeit 2 Sekunden.

Die Furnierungsversuche nach dem Kurztaktverfahren fanden unter folgenden Bedingungen statt:

Preßtemperatur 140°C
Härterauftrag auf Furnier 12 g/m$^2$
Leimauftrag auf Spanplatte 60 g/m$^2$
Preßdruck 0,5 N/mm$^2$
Preßzeit 15 bis 25 Sekunden (vgl. Tabelle 2).

Die Ergebnisse der Anwendungsversuche sind in Tabelle 2 dargestellt.

Tabelle 2:

| Verwendeter Härter | Gelierzeit (s) 10 Gew.Teile Klebemittel und 1 Gew.Teil Härter Temperatur 20°C | Folie Beurteilung | Furnier Preßzeit (s) | | |
|---|---|---|---|---|---|
| | | | 15 Beurteilung | 20 | 25 |
| Härter 1 | 60 | sehr gut | sehr gut bis gut | sehr gut | sehr gut |
| Härter 2 | 58 | sehr gut | befriedigend | sehr gut | sehr gut |
| Härter 3 | 62 | sehr gut | befriedigend bis ausreichend | gut | sehr gut |
| Härter 4 | 55 | sehr gut | befriedigend | sehr gut | sehr gut |
| Härter 5 | 64 | sehr gut | befriedigend | sehr gut | sehr gut |
| Härter 6 | 55 | sehr gut | gut | sehr gut | sehr gut |
| Härter 7 | 45 | sehr gut | befriedigend | gut | sehr gut |

Die Beurteilung umfaßte dabei folgende Kenngrößen:

a) visuelle Beurteilung der Oberfläche
b) Wasserfestigkeit
c) Druckfestigkeit
d) Verhalten gegen Wiedererwärmung durch Aufsetzen eines heißen Topfes mit einer Temperatur von 90 bis 100°C.

0184646
0.Z. 0050/37425

0184646

## Patentansprüche

1. Härter für Aminoplast-Harze, dadurch gekennzeichnet, daß er, bezogen auf sein Gesamtgewicht, 10 bis 30 Gew. % ein- oder mehrbasige anorganische oder organische Säuren, deren $pK_a$-Wert kleiner oder gleich 2 ist, 0,2 bis 1 Gew.% von in wäßrigem Medium Thixotropie verursachenden Stoffen, 1 bis 5 Gew.% an den endständigen Hydroxylgruppen unveretherte oder mit niederen Alkanolen veretherter Oligoglykole und 0,2 bis 2 Gew.% Netzmittel enthält.

2. Härter gemäß Anspruch 1, dadurch gekennzeichnet, daß er als Thixotropie verursachenden Stoff ein Poly(meth)acrylamid enthält.

3. Härter gemäß Anspruch 1, dadurch gekennzeichnet, daß er als Thixotropie verursachenden Stoff ein Polysaccharid enthält.

4. Härter gemäß Anspruch 1, dadurch gekennzeichnet, daß er als Thixotropie verursachenden Stoff Xanthan enthält.

5. Härter gemäß Anspruch 1, dadurch gekennzeichnet, daß er, bezogen auf sein Gesamtgewicht, 1 bis 5 Gew.-% Metallsalze, die sich von Metallen der Gruppen 1A, 2A und 3A des Periodensystems der Elemente ableiten, enthält.

6. Verwendung eines Härters, der, bezogen auf sein Gesamtgewicht, 10 bis 30 Gew.% ein- oder mehrbasige anorganische oder organische Säuren, deren $pK_a$-Wert kleiner oder gleich 2 ist, 0,2 bis 1 Gew.% von in wäßrigem Medium Thixotropie verursachenden Stoffen, 1 bis 5 Gew.% an den endständigen Hydroxylgruppen unveretherter oder mit niederen Alkanolen veretherter Oligoglykole und 0,2 bis 2 Gew.% Netzmittel enthält, zur Aushärtung von Aminoplast-Harzen, die bei der Kaschierung von Holzwerkstoffen mit Folien nach dem Rollenheißkaschierverfahren oder bei der Kurztaktbeschichtung von Holzwerkstoffen mit Holzfurnieren als Klebemittel zur Anwendung kommen.

7. Verwendung eines Härters gemäß Anspruch 6, der als Thixotropie verursachenden Stoff ein Poly(meth)acrylamid enthält.

8. Verwendung eines Härters gemäß Anspruch 6, der als Thixotropie verursachenden Stoff ein Polysaccharid enthält.

9. Verwendung eines Härters gemäß Anspruch 6, der als Thixotropie verursachenden Stoff Xanthan enthält.

10. Verwendung eines Härters gemäß Anspruch 6, der, bezogen auf sein Gesamtgewicht, 1 bis 5 Gew.-% Metallsalze, die sich von Metallen der Gruppen 1A, 2A und 3A des Periodensystems der Elemente ableiten, enthält.

11. Verfahren zur Rollenheißkaschierung von Holzwerkstoffen mit Folien und Aminoplast-Harzen als Klebemitteln, dadurch gekennzeichnet, daß man die Aminoplast-Harze mit einem Härter aushärtet, der, bezogen auf sein Gesamtgewicht, 10 bis 30 Gew.% ein- oder mehrbasige anorganische oder organische Säuren, deren $pK_a$-Wert kleiner oder gleich 2 ist, 0,2 bis 1 Gew.% von in wäßrigem Medium Thixotropie verursachenden Stoffen, 1 bis 5 Gew.% an den endständigen Hydroxylgruppen unveretherter oder mit niederen Alkanolen veretherter Oligoglykole und 0,2 bis 2 Gew.% Netzmittel enthält.

12. Verfahren zur Kurztaktbeschichtung von Holzwerkstoffen mit Holzfurnieren und Aminoplast-Harzen als Klebemitteln, dadurch gekennzeichnet, daß man die Aminoplast-Harze mit einem Härter aushärtet, der, bezogen auf sein Gesamtgewicht, 10 bis 30 Gew.% ein- oder mehrbasige anorganische oder organische Säuren, deren $pK_a$-Wert kleiner oder gleich 2 ist, 0,2 bis 1 Gew.% von in wäßrigem Medium Thixotropie verursachenden Stoffen, 1 bis 5 Gew.% an den endständigen Hydroxylgruppen unveretherter oder mit niederen Alkanolen veretherter Oligoglykole und 0,2 bis 2 Gew.% Netzmittel enthält.